# EUROPEAN PATENT APPLICATION

(11) **EP 0 999 378 A1**
(43) Date of publication of application: **10.05.2000**
(21) Application number: 99203600.4
(22) Date of filing: 01.11.1999
(51) Int. Cl.: F16F 9/06, F16F 9/34

(54) **A damper**

(30) Priority: 04.11.1998 NL 1010469
(71) Applicant: MAASLAND N.V., 3155 PD Maasland (NL)
(72) Inventor: van den Engel, Alfonsus Jacobus, 3123 CM Schiedam (NL); de Groen, Franciscus Johannes Adrianus, 3225 CB Hellevoetsluis (NL)
(74) Representative: Corten, Maurice Jean F.M.

(57) **Abstract**

The invention relates to a damper (1) provided with a housing (2) in which there is accommodated a piston (3) with a piston rod (4), which piston (3) is movable and fits the wall of the housing (2) whilst being capable of dividing the housing (2) into at least a first chamber (5) and a second chamber (6). Between the first and the second chamber (5, 6) there are disposed passing means (8) for causing a gas and/or a liquid to flow from the first to the second chamber and vice versa. In a preferred embodiment of the invention the passing means (8) are constituted by a borehole (9) in the piston (3).

## Description

The invention relates to a damper provided with a housing in which there is accommodated a piston with a piston rod, which piston is movable and fits the wall of the housing whilst being capable of dividing the housing into at least a first chamber and a second chamber.

Such a damper is known.

With the known damper there is a gas present in the first and the second chamber. By moving the piston and the piston rod in the housing, the gas is compressed, so that the movement of the piston and the piston rod is damped.

The known damper has the disadvantage that the more the gas is compressed the more the damping force increases.

The invention aims at providing a damper of the above-mentioned type, in which the aforementioned disadvantage does not occur or is at least minimized.

In accordance with the invention, this is achieved in that between the first and the second chamber there are disposed passing means for causing a gas and/or a liquid to flow from the first to the second chamber and vice versa. In the case that the housing is only filled with a gas or a liquid, the piston with the piston rod is damped with a constant force. In the case that both a liquid and a gas are present in the housing, during movement of the piston and the piston rod, first the gas will flow from the first to the second chamber, which takes place relatively quickly, so that the movement of the piston and the piston rod is relatively quick and, when the liquid flows from the first to the second chamber, the piston with the piston rod will be damped with a relatively great force. According to the invention, in this way it is possible by means of the damper to retard a movement by two different retardation components. This possibility may be very advantageous, for example in an agricultural machine which is brought from a transport position into a working position by means of hydraulic cylinders.

According to an inventive feature, the passing means are constituted by an open connection between the two chambers. In a first embodiment of the invention, the open connection is constituted by a borehole in the cylinder. Dependent on the desired retardation value, said borehole may have a different diameter. According to a further inventive feature, the borehole is provided approximately in the centre of the cylinder. It has appeared that as a result thereof first the gas flows from the first to the second chamber and the liquid only flows from the first to the second chamber after all the gas has disappeared from the first chamber. In order to prevent the borehole, which has a small diameter, from being blocked up by contaminations in the liquid and the gas, according to a further inventive feature, blockage inhibitors, such as a split pin, for example, have been provided in the borehole. The dimensions of the split pen are chosen such that there is enough play for the latter to move in the borehole in such a manner that contaminations, if any, are ground.

In order to adjust the damping value in a simple manner, according to an inventive feature, in the borehole or the pipe there is disposed or included, respectively, a preferably exchangeable nipple having a borehole of a specific diameter.

In accordance with a second embodiment of the invention, the open connection is constituted by a pipe connecting the first chamber with the second chamber. This pipe may be disposed outside the housing. In a preferred embodiment of the invention, the passing means comprise a preferably adjustable throttle valve. In again another embodiment of the invention, the passing means comprise a preferably adjustable pressure relief valve and/or a safety valve. According to again another inventive feature, it is also possible to dispose both an adjustable throttle valve and a pressure relief valve in the damper. With the aid of a pressure relief valve and/or the safety valve it is possible, in the case of non-expected great forces acting on the piston and the piston rod, to prevent the oil and/or the gas from flowing quickly from the first to the second chamber, so that the damper and/or the machine in which it is disposed will not be damaged. According to a further aspect of the invention, at least one of the chambers is provided with filling means with the aid of which a chamber can be filled with a gas and/or a liquid and/or can be tapped off. According to an inventive feature, the maximum amount of liquid present in the housing does not exceed the amount of liquid present in the housing when the piston with the piston rod has been pushed into its most withdrawn position in the housing. In a preferred embodiment of the invention, the gas is constituted by air and the liquid by hydraulic oil. According to an inventive feature, the damper is provided with coupling means with the aid of which the damper is coupled with an adjusting element, such as a hydraulic or pneumatic cylinder.

The invention also relates to a machine provided with a damper as described above. This machine may be constituted in particular by an agricultural machine, such as a tedder or a haymaking machine, for example.

The invention also relates to a method of damping a movement by at least two different retardation values, in which method a gas and a liquid are present in the damper and, in a first phase during movement of the piston and the piston rod in the housing of the damper the gas flows from a first to a second chamber in the housing, and in a second phase the liquid flows from the first to the second chamber, while the piston with the piston rod moves relatively more slowly during the second phase than during the first phase.

The invention will now be explained in further detail with reference to the accompanying drawings, in which
Figure 1 is a cross-section of a damper according to a first embodiment of the invention;
Figure 2 is a cross-section of a damper according to a second embodiment of the invention,
and Figure 3 is a cross-section of a damper according to a third embodiment of the invention.

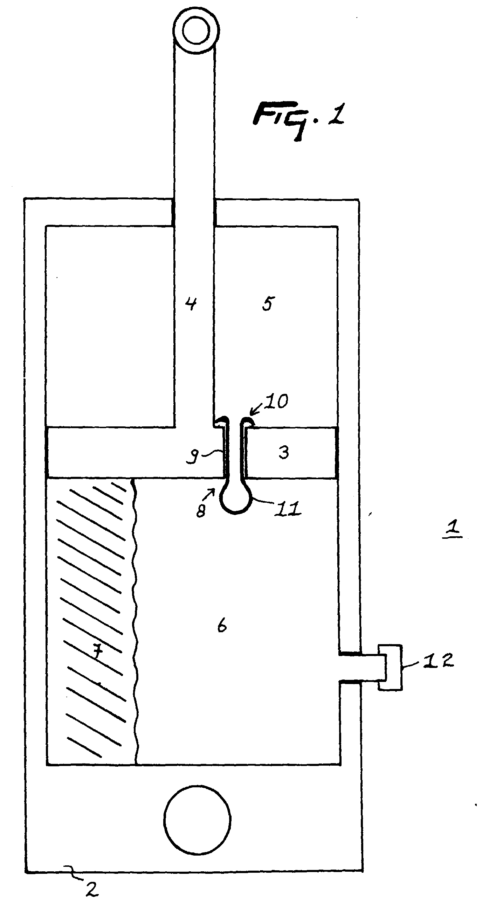

Figure 1 shows a first embodiment of a damper 1 according to the invention. The damper 1 comprises a housing 2 in which a piston 3 with a piston rod 4 is movably disposed. The piston 3 divides the housing 2 into a first chamber 5 and a second chamber 6. The first chamber 5 is filled with a gas and the second chamber 6 is filled with a gas and a liquid 7. The gas may be present in the housing 2 at a vacuum level. In a preferred embodiment of the invention, the gas is constituted by air and the liquid 7 by hydraulic oil.

The piston 3 further comprises passing means 8 connecting the first chamber 5 with the second chamber 6. In the present embodiment, the passing means 8 are constituted by a borehole 9 in the piston 3. In practice the borehole 9 has only a small diameter, e.g. 1.6 mm. In the borehole 9 there are further disposed blockage inhibitors 10 with the aid of which there is tried to prevent the borehole 9 from getting blocked by contamination. The blockage inhibitors 10 are constituted by a split pen 11 which is inserted through the borehole 9. The split pen 11 is disposed in the borehole 9 with little play. Due to the fact that the gas and/or the liquid flows from one chamber to the other, the split pen 11 is set into vibration so that blockages, if any, are ground. It will be obvious that, when a reduction of the damping force is desired, the borehole 9 will have a greater diameter. The housing 2 is further provided with filling means 12 with the aid of which the second chamber 6 can be filled with a gas and/or a liquid or can be tapped off.

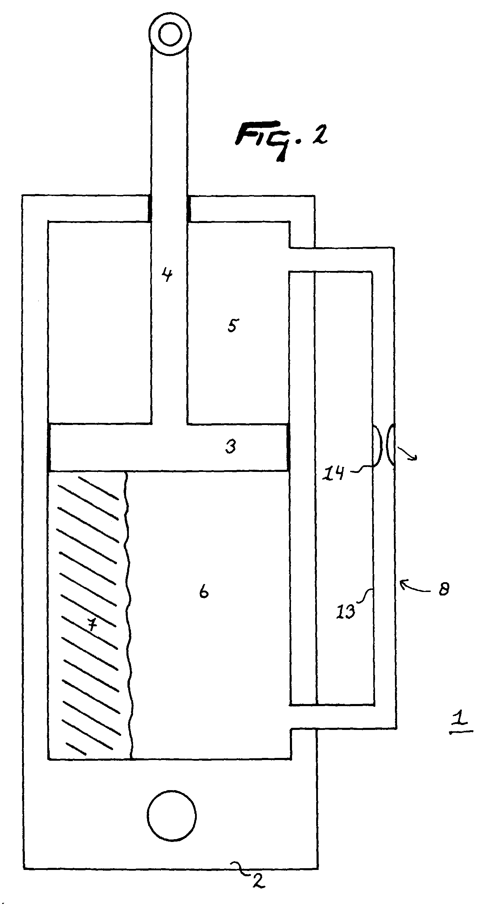

Figure 2 shows a second embodiment of a damper 1 according to the invention, in which parts corresponding to those of the first embodiment are indicated by the same reference numerals. In the second embodiment of the invention, the passing means 8 are constituted by a pipe 13 connecting the first chamber 5 with the second chamber 6. In the pipe 13 there is included an adjustable throttle valve 14. By means of the adjustable throttle valve 14 the diameter of the pipe 13 can be narrowed or widened locally. It will be obvious that this will influence the damping force.

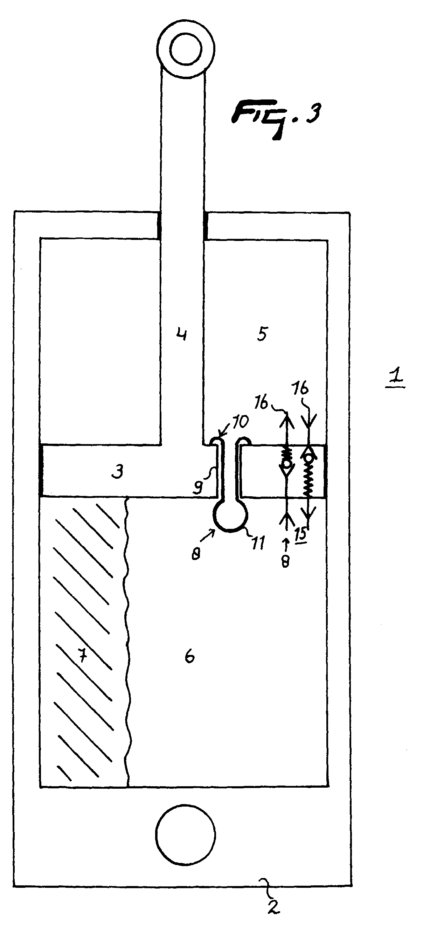

Figure 3 shows a third embodiment of a damper 1 according to the invention, in which parts corresponding to those of the first and second embodiment are indicated by the same reference numerals. The damper shown in Figure 3 is identical to the damper 1 of the first embodiment and is further provided with safety means 15 with the aid of which unexpected forces acting on the piston and the piston rod can be absorbed, so that the damper is prevented from being damaged as a result thereof. In the present embodiment the safety means 15 are constituted by two pressure relief valves 16 capable of causing the oil and/or the gas to flow from one chamber to the other, respectively, when the force with which the piston with the piston rod is moved exceeds a specific threshold value. It will be obvious that besides the pressure relief valves 16 shown it is also possible to provide other safety means such as a safety valve, for example. The passing means 8 may also be constituted by such a pressure relief valve and/or safety valve.

## Claims

1. A damper (1) provided with a housing (2) in which there is accommodated a piston (3) with a piston rod (4), which piston (3) is movable and fits the wall of the housing (2) whilst being capable of dividing the housing (2) into at least a first chamber (5) and a second chamber (6), characterized in that between the first and the second chamber (5, 6) there are disposed passing means (8) for causing a gas and/or a liquid (7) to flow from the first to the second chamber and vice versa.

2. A damper as claimed in claim 1, characterized in that the passing means (8) are constituted by an open connection between the two chambers (5, 6).

3. A damper as claimed in claim 2, characterized in that the open connection is constituted by a borehole (9) in the piston (3).

4. A damper as claimed in claim 3, characterized in that the borehole (9) is provided approximately in the centre of the piston (3).

5. A damper as claimed in claim 4, characterized in that in the borehole (9) there are disposed blockage inhibitors (10), such as a split pen (11).

6. A damper as claimed in any one of claims 3 to 5, characterized in that in the borehole (9) or the pipe (13) there is disposed or included, respectively, a preferably exchangeable nipple having a borehole of a specific diameter.

7. A damper as claimed in claim 2, characterized in that the open connection is constituted by a pipe (13) connecting the first chamber (5) with the second chamber (6).

8. A damper as claimed in any one of the preceding claims, characterized in that the passing means (8) comprise a preferably adjustable throttle valve (14).

9. A damper as claimed in any one of the preceding claims, characterized in that the passing means (8) comprise a preferably adjustable pressure relief valve and/or a safety valve.

10. A damper as claimed in any one of the preceding claims, characterized in that at least one of the chambers is provided with filling means (12) with the aid of which a chamber can be filled with gas and/or liquid and/or can be tapped off.

11. A damper as claimed in any one of the preceding claims, characterized in that the maximum amount of liquid (7) present in the housing (2) does not exceed the amount of liquid present in the housing (2) when the piston (3) with the piston rod (4) has been pushed into its most withdrawn position in the housing (2).

12. A damper as claimed in any one of the preceding claims, characterized in that the gas is constituted by air and the liquid (7) by hydraulic oil.

13. A damper as claimed in any one of the preceding claims, characterized in that the damper (1) is provided with coupling means with the aid of which the damper is coupled with an adjusting element, such as a hydraulic or pneumatic cylinder, for example.

14. A machine provided with a damper (1) as described in any one of claims 1 to 13.

15. A method of damping a movement by at least two different retardation values, in which method a gas and a liquid (7) are present in the damper (1) and, in a first phase during movement of the piston (3) and the piston rod (4) in the housing (2) of the damper (1), the gas flows from a first to a second chamber in the housing (2), and in a second phase the liquid (7) flows from the first to the second chamber, while the piston (3) with the piston rod (4) moves relatively more slowly during the second phase than during the first phase.
